# EUROPÄISCHE PATENTSCHRIFT

(11) **EP 0 932 023 B1**
(45) Veröffentlichungstag und Bekanntmachung des Hinweises auf die Patenterteilung: **27.03.2002**
(21) Anmeldenummer: 98123075.8
(22) Anmeldetag: 10.12.1998
(51) Int. Cl.: G01C 21/00, G08G 1/0967, G01C 21/20

(54) **Kraftfahrzeug mit einem Navigationssystem**
Vehicle with a navigation system
Véhicule avec un système de navigation

(30) Priorität: 23.01.1998 DE 19802595
(43) Veröffentlichungstag der Anmeldung: 28.07.1999
(73) Patentinhaber: Volkswagen Aktiengesellschaft, 38436 Wolfsburg (DE)
(72) Erfinder: Lübke, Andreas, 38442 Wolfsburg (DE); Zawade, Torsten, 31228 Peine (DE); Rech, Bernd, Dr.-Ing., 38473 Tiddiscge-Hoitlingen (DE)

(56) Entgegenhaltungen:
- US-A- 5 565 909
- US-A- 5 767 795
- PATENT ABSTRACTS OF JAPAN vol. 016, no. 399 (M-1300), 24. August 1992 & JP 04 133818 A (MAZDA MOTOR CORP), 7. Mai 1992
- PATENT ABSTRACTS OF JAPAN vol. 013, no. 266 (P-887), 20. Juni 1989 & JP 01 059118 A (NEC HOME ELECTRONICS LTD), 6. März 1989

## Beschreibung

Die Erfindung betrifft ein Kraftfahrzeug mit einem Navigationssystem, welches einen Empfänger und eine mit diesem verbundene Auswerteeinheit zum Auswerten von empfangenen Navigationsdaten zum Bestimmen von Positionsdaten einer aktuellen Position des Fahrzeuges aufweist, gemäß dem Oberbegriff des Anspruchs 1.

Die DE 195 38 694 A1 beschreibt eine Empfangseinrichtung zur Auswertung von Ortungsdaten, insbesondere von GPS-Ortungsdaten, wobei mit einem zusätzlichen Empfänger Zusatzinformationen für die Ortungsdaten empfangbar sind und von einer Auswerteeinheit selektiert, ausgewertet und für einen weitere Verarbeitung zur Verfügung gestellt werden.

Aus der DE 43 44 433 A1 und der DE 44 02 614 A1 ist es bekannt, ein in einem Kraftfahrzeug vorhandenes Satelliten-Navigationssystem (GPS) zur Bestimmung von aktuellen Ortskoordinaten zum Zwecke einer Abrechnung von Straßenbenutzungsgebühren zu verwenden.

Die DE 44 34 789 A1 beschreibt ein GPS-gestütztes Sicherheitssystem für Verkehrswege. Zur Sicherung von Verkehrswegen, die von mehreren Fahrzeugen gemeinsam benutzt werden, wird ein System vorgeschlagen, bei dem jedes beteiligte Fahrzeug eine eigene Position mittels eines auf Satellitennavigation (beispielsweise GPS) beruhenden Navigationsverfahren autonom ermittelt und über eine zusätzlichen Kommunikationsstrecke solchen Fahrzeugen mitteilt, die denselben Verkehrsweg benutzen. Ein Bordrechner ermittelt eventuelle Gefahrenzustände und leitet Gegenmaßnahmen ein. Besonders geeignet ist ein solches Sicherheitssystem für eingleisige Bahnstrecken und zur Vermeidung von (Auffahr-) Unfällen auf Autobahnen.

Die DE 196 00 734 A1 beschreibt ein Verfahren zur Steuerung von Aggregaten eines Kraftfahrzeugs, wobei GPS-Daten zum Bestimmen einer Fahrzeugumgebung mit im Fahrzeug geführten, statistischen Daten verknüpft und zu einer Stellgröße verarbeitet werden, welche ein Schaltprogramm eines gestuften oder stufenlosen automatischen Getriebes des Kraftfahrzeuges variiert.

Der vorliegenden Erfindung liegt die Aufgabe zugrunde, einen Bedienkomfort für ein Kraftfahrzeug zu erhöhen.

Diese Aufgabe wird erfindungsgemäß durch ein Kraftfahrzeug der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß eine mit der Auswerteeinheit verbundene Landbestimmungseinrichtung vorgesehen ist, welche aus den Positionsdaten bestimmt, in welchem Land sich das Fahrzeug in der aktuellen Position befindet.

Dies hat den Vorteil, daß eine Einstellung von Länderspezifikationen eines Kraftfahrzeuges in Abhängigkeit vom momentanen Aufenthaltsort des Kraftfahrzeuges erfolgt, so daß eine fest vorbestimmte und unveränderbare Einstellung von länderspezifischen Kraftfahrzeugparametern entfallen kann. Dadurch vereinfacht sich ein Herstellungsverfahren und eine Variantenzahl bei der Herstellung von Kraftfahrzeugen für unterschiedliche Länder ist reduziert.

Zweckmäßigerweise ist das Navigationssystem ein Satelliten-Navigationssystem, insbesondere ein GPS-System.

In einer bevorzugten Ausführungsform ist ferner wenigstens ein mit der Landbestimmungseinrichtung verbundenes Steuergerät vorgesehen, welches in Abhängigkeit von dem von der Landbestimmungseinrichtung bestimmten Land vorbestimmte Kraftfahrzeugparameter einstellt. Hierbei sind die vorbestimmten Kraftfahrzeugparameter zweckmäßigerweise eine Schließsystemeinstellung, eine Maßeinheit einer Geschwindigkeitsanzeige, eine Maßeinheit einer Wegstreckenanzeige und/oder ein Schaltzustand von Kraftfahrzeugbeleuchtungen.

Für eine einfache und sichere Einstellung des Kraftfahrzeuges auf unterschiedliche länderspezifische Einstellungen weist das Kraftfahrzeug zum Übertragen der Information bezüglich des von der Landbestimmungseinrichtung bestimmten Landes an wenigstens ein Steuergerät im Kraftfahrzeug einen Busanschluß, insbesondere für einen CAN-Bus, auf. Die Landbestimmungseinrichtung ist vorzugsweise ein CAN-Knoten, wobei in vorteilhafter Weise das Steuergerät ein CAN-Knoten, insbesondere ein Bordnetzsteuergerät ist. Das Steuergerät steuert zum Einstellen von vorbestimmten länderspezifischen Kraftfahrzeugparametem zweckmäßigerweise in Abhängigkeit von dem von der Landbestimmungseinrichtung bestimmten Land wenigstens einen weiteren Bus-Anschluß an. Hierbei ist in vorteilhafter Weise der weitere Bus-Anschluß ein Lichtmodul, ein Schließsystemsteuergerät, ein Instrumentenbrettsteuergerät und/oder ein Steuergerät für eine Kraftfahrzeugbeleuchtung.

In einer besonders bevorzugten Ausführungsform ist eine Speichereinrichtung vorgesehen, in welcher für vorbestimmte Länder jeweils ein vorbestimmter Satz länderspezifischer Kraftfahrzeug-Parametereinstellungen gespeichert ist, welcher entsprechend dem von der Landbestimmungseinrichtung bestimmten Land abgerufen wird, so daß die entsprechende länderspezifische Kraftfahrzeug-Parametereinstellung, welche dem aktuell von der Landbestimmungseinrichtung bestimmten Land entspricht, eingestellt ist. Hierbei ist zweckmäßigerweise die Speichereinrichtung separat im Kraftfahrzeug, integral in der Landbestimmungseinrichtung oder integral in einem Steuergerät angeordnet.

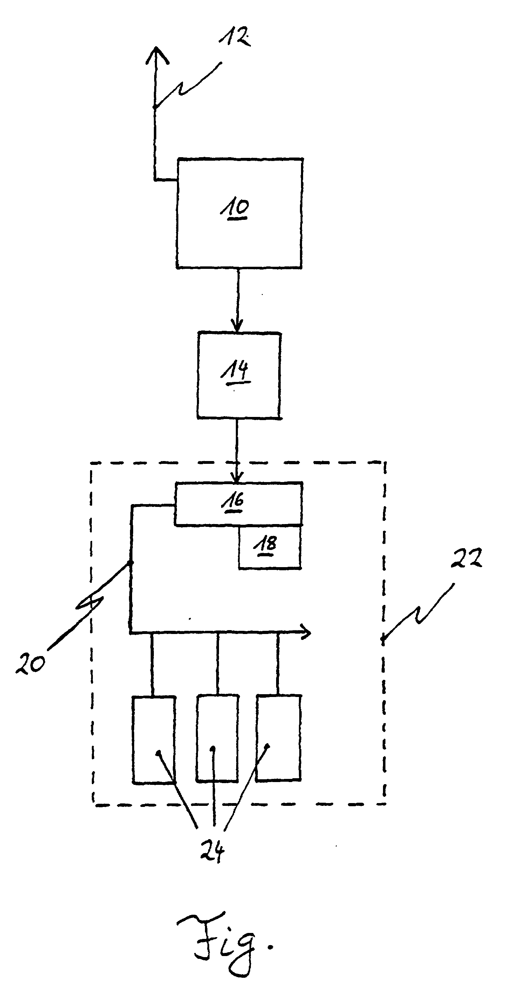

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt als bevorzugte Ausführungsform ein schematisches Blockschaltbild eines in einem erfindungsgemäßen Kraftfahrzeug integrierten Satelliten-Navigationssystems.

Ein GPS-Empfänger 10 empfängt über eine Antenne 12 Navigationsdaten von Satelliten. Diese Navigationsdaten werden in einem Dekoder 14 ausgewertet, welcher entsprechende Positionsdaten berechnet. Der Dekoder 14 gibt diese Daten an nicht näher dargestellte Einrichtung für eine satellitengestützte Navigation weiter, wie beispielsweise einen Navigationsrechner, welcher über ein entsprechendes Display einen Fahrer des Kraftfahrzeugs zu einem gewünschten Ziel führt. Erfindungsgemäß gibt der Dekoder 14 die von ihm berechneten Positionsdaten an eine Landbestimmungseinrichtung 16 weiter. Diese bestimmt aus den Positionsdaten das entsprechende Land, in dem sich das Fahrzeug aufgrund der momentanen Positionsdaten befindet.

Für jedes Land ist in einer Speichereinrichtung 18 ein Satz von länderspezifischen Parametern gespeichert, welche entsprechend dem von der Landbestimmungseinrichtung 16 bestimmten Land abgerufen werden. Über einen Datenbus 20 (CAN = Controller Area Network, lokales Netzwerk) in einem CAN 22 spricht nunmehr die Landbestimmungseinrichtung 16 entsprechende Steuergeräte 24 im Kraftfahrzeug derart an, daß länderspezifische Parameter entsprechend dem momentanen Standort des Kraftfahrzeuges eingestellt werden. Hierbei kann es sich um jeweilige separate Steuergeräte 24 beispielsweise um ein Steuergerät für eine Kraftfahrzeugbeleuchtung, eine Schließsystemsteuergerät und/oder ein Instrumentenbrettsteuergerät handeln. Alternativ kann jedoch auch ein einziges Steuergerät 24 vorgesehen sein, welches alle relevanten Fahrzeugkomponenten ansteuert.

In Abhängigkeit vom momentanen Aufenthaltsland des Kraftfahrzeuges werden somit länderspezifische Einstellungen am Kraftfahrzeug vorgenommen. Beispielsweise wird in skandinavischen Ländern automatisch das Abblendlicht bzw. Standlicht eingeschaltet, da dies dort auch am Tage vorgeschrieben ist. Somit muß sich der Fahrer nicht um derartige Dinge kümmern. Ferner stellt beispielsweise das Instrumentenbrettsteuergerät eine insbesondere digitale Geschwindigkeitanzeige auf MPH (miles per hour) oder km/h um bzw. eine insbesondere digitale Entfernungsanzeige auf Miles oder km um, je nachdem ob das Fahrzeug in Europa oder in den USA betrieben wird. Eine entsprechende länderspezifische Programmierung kann dementsprechend entfallen. Bei Eintritt in das Vereinigte Königreich, in dem Linksverkehr vorgeschrieben ist, ändert beispielsweise ein Lichtmodul Einstellungen der Scheinwerfer derart, daß ein asymmetrisches Licht entsprechend nach links und nicht mehr nach rechts ausgerichtet ist. Für den Fahrer entfällt somit ein mühsames Abkleben von teilen einer Scheinwerferverglasung.

Die Verwendung des CAN 22 macht dabei das System besonders flexibel und vermindert einen Kabelaufwand des elektrischen Systems, da alle Informationen über eine einzige Datenleitung laufen. Die Steuergeräte 24 und die Landbestimmungseinrichtung 16 sind dabei zweckmäßigerweise als CAN-Knoten ausgebildet, denen jeweilige Adressen zugeordnet sind. Den über den CAN-Bus 20 laufenden Informationen bzw. Datenpaketen sind entsprechende Adressen angehängt, so daß zwar jeder CAN-Knoten alle Datenpakte empfängt, jedoch sofort anhand eines Adressenvergleiches feststellen kann, ab dieses Datenpaket für ihn oder einen anderen CAN-Knoten bestimmt ist.

### BEZUGSZEICHENLISTE

- 10: GPS-Empfänger
- 12: Antenne
- 14: Dekoder
- 16: Landbestimmungseinrichtung
- 18: Speichereinrichtung
- 20: Datenbus
- 22: CAN
- 24: Steuergeräte

## Patentansprüche

1. Kraftfahrzeug mit einem Navigationssystem, welches einen Empfänger (10) und eine mit diesem verbundene Auswerteeinheit (14) zum Auswerten von empfangenen Navigationsdaten zum Bestimmen von Positionsdaten einer aktuellen Position des Fahrzeuges aufweist,
**dadurch gekennzeichnet, daß**
eine mit der Auswerteeinheit (14) verbundene Landbestimmungseinrichtung (16) vorgesehen ist, welche aus den Positionsdaten bestimmt, in welchem Land sich das Fahrzeug in der aktuellen Position befindet.

2. Kraftfahrzeug nach Anspruch 1,
**dadurch gekennzeichnet, daß**
das Navigationssystem ein Satelliten-Navigationssystem, insbesondere ein GPS-System, ist.

3. Kraftfahrzeug nach Anspruch 1 oder 2,
**dadurch gekennzeichnet, daß**
ferner wenigstens ein mit der Landbestimmungseinrichtung (16) verbundenes Steuergerät (24) vorgesehen ist, welches in Abhängigkeit von dem von der Landbestimmungseinrichtung bestimmten Land vorbestimmte Kraftfahrzeugparameter einstellt.

4. Kraftfahrzeug nach Anspruch 3,
**dadurch gekennzeichnet, daß**
die vorbestimmten Kraftfahrzeugparameter eine Schließsystemeinstellung, eine Maßeinheit einer Geschwindigkeitsanzeige, eine Maßeinheit einer Wegstreckenanzeige und/oder ein Schaltzustand von Kraftfahrzeugbeleuchtungen sind.

5. Kraftfahrzeug nach einem der vorhergehenden Ansprüche,
**dadurch gekennzeichnet, daß**
das Kraftfahrzeug zum Übertragen der Information bezüglich des von der Landbestimmungseinrichtung (16) bestimmten Landes an wenigstens ein Steuergerät (24) im Kraftfahrzeug einen Datenbus (20) aufweist.

6. Kraftfahrzeug nach Anspruch 5,
**dadurch gekennzeichnet, daß**
die Landbestimmungseinrichtung (16) ein CAN-Knoten ist.

7. Kraftfahrzeug nach einem der Ansprüche 5 oder 6,
**dadurch gekennzeichnet, daß**
das Steuergerät (24) ein CAN-Knoten, insbesondere ein Bordnetzsteuergerät ist.

8. Kraftfahrzeug nach einem der vorhergehenden Ansprüche,
**dadurch gekennzeichnet, daß**
das Steuergerät (24) in Abhängigkeit von dem von der Landbestimmungseinrichtung (16) bestimmten Land wenigstens einen weiteren CAN-Knoten ansteuert, zum Einstellen von vorbestimmten länderspezifischen Kraftfahrzeugparametern.

9. Kraftfahrzeug nach einem der Ansprüche 5 bis 8,
**dadurch gekennzeichnet, daß**
der weitere CAN-Knoten ein Lichtmodul, ein Schließsystemsteuergerät, ein Instrumentenbrettsteuergerät und/oder ein Steuergerät für eine Kraftfahrzeugbeleuchtung ist.

10. Kraftfahrzeug nach einem der vorhergehenden Ansprüche,
**dadurch gekennzeichnet, daß**
eine Speichereinrichtung (18) vorgesehen ist, in welcher für vorbestimmte Länder jeweils ein vorbestimmter Satz von länderspezifische Kraftfahrzeug-Parametereinstellung gespeichert ist, welcher entsprechend dem von der Landbestimmungseinrichtung (16) bestimmten Landes abgerufen wird, so daß die entsprechende länderspezifische Kraftfahrzeug-Parametereinstellung, welche dem aktuell von der Landbestimmungseinrichtung (16) bestimmten Land entspricht, eingestellt ist.

11. Kraftfahrzeug nach Anspruch 10,
**dadurch gekennzeichnet, daß**
die Speichereinrichtung (18) separat im Kraftfahrzeug, integral in der Landbestimmungseinrichtung (16) oder integral in einem Steuergerät (24) angeordnet ist.

## Claims

1. Motor vehicle having a navigation system which comprises a receiver (10) and an evaluation unit (14), connected thereto, for evaluating received navigation data to determine position data for a current position of the vehicle,
**characterized in that**
a country determination device (16) connected to the evaluation unit (14) is provided which uses the position data to determine the country in which the vehicle is located in the current position.

2. Motor vehicle according to Claim 1,
**characterized in that**
the navigation system is a satellite navigation system, in particular a GPS system.

3. Motor vehicle according to Claim 1 or 2,
**characterized in that**,
in addition, at least one control unit (24) connected to the country determination device (16) is provided which sets motor vehicle parameters predetermined on the basis of the country determined by the country determination device.

4. Motor vehicle according to Claim 3,
**characterized in that**
the predetermined motor vehicle parameters are a closure system setting, a unit of measure for a speed indicator, a unit of measure for a distance indicator and/or a switching state for motor vehicle lighting systems.

5. Motor vehicle according to one of the preceding claims,
**characterized in that**
the motor vehicle has a data bus (20) for transferring the information regarding the country determined by the country determination device (16) to at least one control unit (24) in the motor vehicle.

6. Motor vehicle according to Claim 5,
**characterized in that**
the country determination device (16) is a CAN node.

7. Motor vehicle according to one of Claims 5 or 6,
**characterized in that**
the control unit (24) is a CAN node, in particular a vehicle-supply control unit.

8. Motor vehicle according to one of the preceding claims,
**characterized in that**
the control unit (24) drives at least one further CAN node on the basis of the country determined by the country determination device (16), in order to set predetermined country-specific motor vehicle parameters.

9. Motor vehicle according to one of Claims 5 to 8,
**characterized in that**
the further CAN node is a light module, a closure system control unit, a dashboard control unit and/or a control unit for a motor vehicle lighting system.

10. Motor vehicle according to one of the preceding claims,
**characterized in that**
a memory device (18) is provided which stores a respective predetermined set of country-specific motor vehicle parameter settings for predetermined countries, said set being retrieved on the basis of the country determined by the country determination device (16), so that the appropriate country-specific motor vehicle parameter setting which corresponds to the country currently determined by the country determination device (16) is set.

11. Motor vehicle according to Claim 10,
**characterized in that**
the memory device (18) is arranged separately in the motor vehicle, integrally in the country determination device (16) or integrally in a control unit (24).

## Revendications

1. Véhicule avec un système de navigation, lequel présente un récepteur (10) et un module d'analyse (14) relié à celui-ci pour analyser les données de navigation reçues afin de déterminer les données de position d'une position actuelle du véhicule, **caractérisé en ce qu'**il est prévu un dispositif de détermination de pays (16) relié au module d'analyse (14), lequel détermine à partir des données de position le pays dans lequel se trouve le véhicule dans sa position actuelle.

2. Véhicule selon la revendication 1, **caractérisé en ce que** le système de navigation est un système de navigation par satellite, plus particulièrement un système GPS.

3. Véhicule selon la revendication 1 ou 2, **caractérisé en ce qu'**il est en outre prévu au moins un appareil de commande (24) relié au dispositif de détermination du pays (16), lequel règle certains paramètres prédéfinis du véhicule en fonction du pays déterminé par le dispositif de détermination du pays.

4. Véhicule selon la revendication 3, **caractérisé en ce que** les paramètres prédéfinis du véhicule sont un réglage du système de fermeture, une unité de mesure d'un indicateur de vitesse, une unité de mesure d'un indicateur de distance parcourue et/ou un état de commutation des équipements d'éclairage du véhicule.

5. Véhicule selon l'une des revendications précédentes, **caractérisé en ce que** le véhicule présente un bus de données (20) pour transmettre les informations relatives au pays déterminé par le dispositif de détermination du pays (16) à au moins un appareil de commande (24) dans le véhicule.

6. Véhicule selon la revendication 5, **caractérisé en ce que** le dispositif de détermination du pays (16) est un noeud CAN.

7. Véhicule selon l'une des revendications 5 ou 6, **caractérisé en ce que** l'appareil de commande (24) est un noeud CAN, plus précisément un appareil de commande du réseau embarqué.

8. Véhicule selon l'une des revendications précédentes, **caractérisé en ce que** l'appareil de commande (24) commande au moins un noeud CAN supplémentaire en fonction du pays déterminé par le dispositif de détermination du pays (16) afin de régler des paramètres prédéfinis du véhicule spécifiques au pays.

9. Véhicule selon l'une des revendications 5 à 8, **caractérisé en ce que** le noeud CAN supplémentaire est un module d'éclairage, un appareil de commande du système de fermeture, un appareil de commande du tableau de bord et/ou un appareil de commande pour un équipement d'éclairage du véhicule.

10. Véhicule selon l'une des revendications précédentes, **caractérisé en ce qu'**il est prévu un dispositif de mémorisation (18) dans lequel sont enregistrés, pour des pays prédéfinis, des jeux de paramètres du véhicule spécifiques à chaque pays, lesquels sont appelés en fonction du pays déterminé par le dispositif de détermination du pays (16) de manière à ce que le paramétrage du véhicule spécifique au pays correspondant qui est fixé corresponde au pays actuellement déterminé par le dispositif de détermination du pays (16).

11. Véhicule selon la revendication 10, **caractérisé en ce que** le dispositif de mémorisation (18) est disposé séparément dans le véhicule ou intégré dans le dispositif de détermination du pays (16) ou intégré dans un appareil de commande (24).
